# FASCICULE DE BREVET EUROPEEN

(11) **EP 2 070 276 B1**
(45) Date de publication et mention de la délivrance du brevet: **18.03.2020**
(21) Numéro de dépôt: 07848368.2
(22) Date de dépôt: 24.09.2007
(51) Int. Cl.: H04W 40/02, H04L 12/721

(54) **PROCÉDÉ POUR ÉVALUER LA FIABILITÉ D'UNE ROUTE DANS UN RÉSEAU COOPÉRATIF**
VERFAHREN ZUR BEWERTUNG DER ZUVERLÄSSIGKEIT EINER ROUTE IN EINEM KOOPERATIVEN NETZWERK
METHOD FOR EVALUATING THE RELIABILITY OF A ROUTE IN A COOPERATIVE NETWORK

(30) Priorité: 26.09.2006 FR 0653942
(43) Date de publication de la demande: 17.06.2009
(73) Titulaire: Orange, 75015 Paris (FR)
(72) Inventeur: TOUROLLE, Benjamin, F-14000 Caen (FR); LANIEPCE, Sylvie, F-14000 Caen (FR)
(86) Numéro de dépôt international: PCT/FR2007/051998
(87) Numéro de publication internationale: WO 2008/037916

(56) Documents cités:
- US-A1- 2006 002 366
- SEUNG YI, PRASAD NALDURG, ROBIN KRAVETS: "SECURITY AWARE AD HOC ROUTING FOR WIRELESS NETWORKS" PROCEEDINGS OF THE {ACM} SYMPOSIUM ON MOBILE AD HOC NETWORKING AND COMPUTING ({MOBIHOC} 2001), [Online] octobre 2001 (2001-10), pages 1-4, XP002435568 Long Beach, CA Extrait de l'Internet: URL:http://www.cs.huji.ac.il/labs/danss/se nsor/adhoc/routing/yi_2001securityaware.pd f> [extrait le 2007-05-30]
- CHRISTIAN D JENSEN ET AL: "Trust-Based Route Selection in Dynamic Source Routing" TRUST MANAGEMENT LECTURE NOTES IN COMPUTER SCIENCE;;LNCS, SPRINGER-VERLAG, BE, vol. 3986, mai 2006 (2006-05), pages 150-163, XP019036669 ISBN: 978-3-540-34295-3
- BUCHEGGER S ET AL: "SELF-POLICING MOBILE AD HOC NETWORKS BY REPUTATION SYSTEMS" IEEE COMMUNICATIONS MAGAZINE, IEEE SERVICE CENTER,NEW YORK, NY, US, vol. 43, no. 7, juillet 2005 (2005-07), pages 101-107, XP001233796 ISSN: 0163-6804
- PORTMANN M ET AL: "Mitigating routing misbehaviour of rational nodes in chord" APPLICATIONS AND THE INTERNET WORKSHOPS, 2004. SAINT 2004 WORKSHOPS. 2004 INTERNATIONAL SYMPOSIUM ON 26-30 JAN. 2004, PISCATAWAY, NJ, USA,IEEE, 26 janvier 2004 (2004-01-26), pages 503-507, XP010684274 ISBN: 0-7695-2050-2
- SEUNG YI ET AL: "SECURITY AWARE AD HOC ROUTING FOR WIRELESS NETWORKS", ANNUAL WORKSHOP ON MOBILE AND AD HOC NETWORKING AND COMPUTING.MOBIHOC, XX, XX, 1 October 2001 (2001-10-01), pages 1-4, XP002435568,
- CHRISTIAN D JENSEN ET AL: "Trust-Based Route Selection in Dynamic Source Routing", 1 January 2006 (2006-01-01), INTERNATIONAL CONFERENCE ON SIMULATION, MODELING, AND PROGRAMMING FOR AUTONOMOUS ROBOTS,SIMPAR 2010; [LECTURE NOTES IN COMPUTER SCIENCE; LECT.NOTES COMPUTER], SPRINGER, BERLIN, HEIDELBERG, PAGE(S) 150 - 163, XP019036669, ISBN: 978-3-642-17318-9
- BUCHEGGER S ET AL: "SELF-POLICING MOBILE AD HOC NETWORKS BY REPUTATION SYSTEMS", IEEE COMMUNICATIONS MAGAZINE, IEEE SERVICE CENTER, PISCATAWAY, US, vol. 43, no. 7, 1 July 2005 (2005-07-01), pages 101-107, XP001233796, ISSN: 0163-6804, DOI: 10.1109/MCOM.2005.1470831
- PORTMANN M ET AL: "Mitigating routing misbehaviour of rational nodes in chord", APPLICATIONS AND THE INTERNET WORKSHOPS, 2004. SAINT 2004 WORKSHOPS. 2 004 INTERNATIONAL SYMPOSIUM ON 26-30 JAN. 2004, PISCATAWAY, NJ, USA,IEEE, 26 January 2004 (2004-01-26), pages 503-507, XP010684274, DOI: 10.1109/SAINTW.2004.1268685 ISBN: 978-0-7695-2050-6

## Description

L'invention concerne une technique pour évaluer la fiabilité d'une route dans un réseau coopératif pour la transmission de paquets de données entre un nœud source et un nœud de destination du réseau.

Les réseaux ad hoc, sont des réseaux sans fil spontanés qui ne s'appuient sur aucune infrastructure de communication particulière. Les terminaux de ces réseaux, appelés par la suite nœuds, sont dotés d'un double rôle : utiliser le réseau pour leurs propres besoins et contribuer à la connectivité entre les nœuds du réseau. Ces réseaux sont dits coopératifs car les nœuds remplissent donc à la fois les fonctions de terminaux et de routeurs pour les besoins des autres terminaux. On appelle par la suite une route une liste ordonnée de nœuds permettant l'acheminement de paquets de données entre un nœud source et un nœud destination. Dans de tels réseaux, le routage d'un paquet de données peut être réalisé par la source, c'est-à-dire que le nœud associe au paquet à transmettre la route que doit suivre le paquet.

Ce type de réseau repose sur des mécanismes de confiance mutuelle entre les différents nœuds. Toutefois, un nœud appartenant à une route peut se révéler peu coopérant ou voire même malveillant et perturber plus ou moins l'acheminement de paquets de données. Ainsi des techniques de gestion de la réputation ont été proposées pour ce type de réseau. Une première technique, telle que décrite dans l'article de S. Marti, T. J. Giuli, K. Lai, M. Baker, intitulé "Mitigating Routing Misbehavior in Mobile Ad Hoc Networks", paru dans les actes de la conférence internationale "6th annual ACM/IEEE International Conférence on Mobile Computing and Networking" 2000, permet à chaque nœud de superviser la transmission du paquet. Lorsqu'un nœud reçoit un paquet de données d'un nœud source et à transmettre à un nœud voisin, il le transmet au nœud voisin et vérifie, par écoute de la voie radio, que celui-ci a effectivement retransmis le paquet à un nœud suivant. Lorsque le nombre de paquets non retransmis par ce nœud voisin excède un seuil, il considère que le nœud voisin est malveillant et envoie un message au nœud source pour lui signaler la malveillance du nœud voisin. Ce même article présente également une méthode d'administration d'une base de données de confiance, basée sur une observation d'une route. Cette méthode nécessite obligatoirement un protocole de routage par la source. Cette base de données de confiance mémorise pour chaque nœud du réseau coopératif connu une note identifiant sa contribution au fonctionnement du réseau. Lorsqu'une route est valide et utilisée, le nœud source met périodiquement à jour les notes des nœuds appartenant à la route. Lorsque, lors de l'envoi d'un paquet, la route n'est plus valide, les notes des nœuds inaccessibles sont décrémentées. Le nœud, pour sélectionner une route à utiliser pour la transmission de paquet de données entre un nœud de destination et lui-même, utilise alors sa base de données de confiance pour sélectionner la route la plus fiable.

Selon une deuxième technique, décrite dans l'article de Seung Yi et al. intitulé « Security-Aware Ad-hoc Routing for Wireless Networks », paru dans les actes du « Symposium on Mobile Ad-hoc Networking and Computing », Long Beach, Californie,octobre 2001, un message de requête de route indiquant un niveau de sécurité demandé est transmis à partir d'un nœud source vers un nœud de destination. Si un nœud intermédiaire situé sur une route entre le nœud source et le nœud de destination ne peut pas satisfaire le niveau de sécurité demandé, il ne retransmet pas le message de requête. S'il peut le satisfaire, il retransmet le message de requête après avoir mis à jour un champ représentant le niveau de sécurité maximum parmi les niveaux de sécurité que tous les nœuds intermédiaires sur la route utilisée peuvent offrir. Lorsque le nœud de destination reçoit le message de requête, il répond au nœud source le long de la route inverse, avec un message de réponse indiquant un niveau de sécurité égal au niveau de sécurité maximum reçu. Ainsi, le nœud de destination ne fait que copier dans son message de réponse un niveau de sécurité qu'il a reçu dans le message de requête, sans aucune évaluation de sa part dudit niveau de sécurité.

Une technique alternative est proposée dans l'article de C. Jensen, P. O'Connell, intitulé "Trust-Based Selection in Dynamic Source Routing", paru dans les actes de la 4ème conférence internationale iTrust de mai 2006. Lorsqu'un nœud de destination signale au nœud source par un acquittement qu'un paquet de données est arrivé correctement à destination, les valeurs de l'indice de confiance de l'ensemble des nœuds de la route sont augmentées respectivement par le nœud source ; dans le cas contraire, elles sont diminuées. Ainsi, le nœud source peut calculer un indice de confiance associé à la route en fonction des indices de confiance de l'ensemble des nœuds de la route et sélectionner une route en fonction de différents paramètres dont l'indice de confiance.

Chaque nœud source administre ainsi sa propre base de données d'indices de confiance. Il doit donc expérimenter des routes, avec le cas échéant un mauvais choix en raison de la présence d'un nœud malveillant, et se fier à ses propres expériences. Il en résulte que la sélection de la route par le nœud source manque de fiabilité. Il existe donc un besoin d'une technique permettant, dans un réseau coopératif, de fiabiliser un mécanisme de sélection de routes entre un nœud source et un nœud destination, par le nœud source.

L'invention répond à ce besoin en proposant un procédé pour évaluer la fiabilité d'une route dans un réseau coopératif pour la transmission de paquets de données entre un nœud source et un nœud de destination du réseau. Le procédé comprend sur réception par le nœud de destination d'un message indiquant une route entre les deux nœuds :
- une étape d'association à la route indiquée d'au moins un paramètre indicateur de fiabilité évalué par le nœud de destination et,
- une étape d'envoi au nœud source d'une réponse comprenant le paramètre associé à la route indiquée.

On notera que l'invention tire son origine d'un problème de confiance dans un réseau coopératif. Toutefois, l'invention peut s'appliquer également à l'envoi par le nœud de destination au nœud source de tout paramètre lui permettant de fiabiliser la sélection de la route qu'il va utiliser.

Le nœud de destination reçoit un message de requête de route émis par un nœud source et indiquant une route entre les deux nœuds. Le nœud de destination possède des informations sur les nœuds du réseau généralement différentes de celles que possède le nœud source. En effet, il peut être le nœud de destination d'une pluralité de routes ayant pour origine une pluralité de nœuds source. Il observe donc le réseau coopératif sous un angle différent. A la réception du message de requête de route, il évalue au moins un paramètre indicateur de fiabilité à associer à la route et envoie une réponse en y associant ce paramètre au nœud source, émetteur du message de requête de route. Ainsi, le nœud de destination coopère avec le nœud source, en partageant avec lui les informations dont il dispose sur la route, pour aider le nœud source à évaluer si une route donnée est fiable. Le nœud source obtient ainsi un paramètre qu'il peut utiliser de façon complémentaire à des critères locaux pour évaluer la fiabilité de cette route et éventuellement la sélectionner.

L'invention est particulièrement avantageuse dans le cadre de réseaux ad hoc hybrides. Les réseaux ad hoc hybrides sont des réseaux coopératifs particuliers dont l'un des nœuds, administré par un opérateur, est un point d'accès à un réseau d'infrastructure fixe. Les nœuds du réseau ad hoc hybride coopèrent entre eux afin que ceux situés hors de la couverture radio du point d'accès puissent néanmoins accéder au réseau d'infrastructure. Le point d'accès se trouve alors être un point de passage privilégié des communications et correspond au nœud de destination de la plupart des routes, voire de toutes. Ce point d'accès est administré par un opérateur et est donc un nœud particulièrement "de confiance". Ses capacités de traitement peuvent être également plus importantes que celles de nœuds standards du réseau coopératif. Les informations qu'il peut fournir sont également réputées fiables contrairement aux informations qui peuvent être fournies par des nœuds quelconques.

Dans un mode de réalisation, le paramètre indicateur de fiabilité associé à la route est évalué à partir d'informations administrées par le nœud de destination relatives aux nœuds du réseau, ces informations appartenant au groupe comportant un indice de confiance, un indice de charge, un indice de structure du réseau et une combinaison de ces indices.

Un nœud du réseau, et plus particulièrement un point d'accès dans un réseau ad hoc hybride, peut posséder des informations complémentaires sur les nœuds du réseau coopératif. Cela peut être des indices de confiance qu'il a lui-même évalués. Il peut également s'agir d'informations de charge que lui auraient transmises les nœuds ou de toute autre information liée à l'architecture du réseau. Il peut aussi recommander des routes qui traversent des nœuds de son propre réseau. Par le biais de ces informations, le nœud de destination peut contribuer à l'évaluation de la fiabilité d'une route, réalisée par le nœud source, et en fonction de ses propres informations.

Avantageusement, le nœud source envoie un message de requête de route à une pluralité de nœuds voisins, le message étant transmis de nœud en nœud dans le réseau à destination du nœud de destination et indiquant au fur et à mesure la route suivie par le message.

Le procédé est particulièrement avantageux lorsque le nœud de destination reçoit une pluralité de routes suite à l'envoi par le nœud source d'une pluralité de messages de requête de route. Il n'en est que plus efficace. Il peut alors évaluer, pour chacune des routes, un ou des paramètres indicateurs de fiabilité et les transmettre au nœud source.

Avantageusement, le nœud source reçoit une pluralité de réponses du nœud destination correspondant à une pluralité de routes indiquées au nœud de destination, et il est prévu une étape de sélection de route prenant en compte au moins les paramètres respectifs associés aux dites routes.

Le nœud source a la possibilité de prendre en compte le ou les paramètres indicateurs de fiabilité de différentes façons. Il peut éventuellement se baser uniquement sur le paramètre indicateur de fiabilité reçu et se dispenser ainsi de l'administration d'une base de données de confiance locale. Il peut ainsi économiser à la fois de la capacité de traitement nécessaire à la constitution de la base de données et des ressources mémoire en utilisant uniquement le paramètre transmis par le nœud de destination pour évaluer la fiabilité de cette route. Il peut également le combiner avec des paramètres indicateurs de fiabilité relatifs aux nœuds du réseau coopératif évalués en local. De plus, les échanges entre les deux nœuds se limitent à un ou des paramètres indicateur de fiabilité associés à la route et non à des paramètres indicateurs de fiabilité associés respectivement aux nœuds de la route.

L'invention concerne également un nœud dans un réseau coopératif, agencé pour recevoir l'indication d'une route entre un nœud source et lui-même, comprenant :
- des moyens d'évaluation, agencés pour évaluer pour une route reçue au moins un paramètre indicateur de fiabilité ;
- des moyens d'association, agencés pour associer à une route au moins un paramètre indicateur de fiabilité ;
- des moyens d'envoi, agencés pour transmettre audit nœud source une réponse comprenant le paramètre associé.

L'invention concerne en outre un nœud dans un réseau coopératif, agencé pour transmettre des paquets de données à destination d'un autre nœud du réseau, comprenant :
- des moyens de recherche de route, agencés pour transmettre un message de recherche de route à destination d'un nœud du réseau ;
- des moyens de réception, agencés pour recevoir une réponse au message de recherche de route, la réponse comprenant une route entre le nœud du réseau et lui-même et au moins un paramètre indicateur de fiabilité associé à la route.

L'invention concerne également un système de communication entre une pluralité de nœuds dans un réseau coopératif, comprenant au moins un nœud agencé pour recevoir l'indication d'une route entre un nœud source et lui-même, tel que décrit ci-dessus, et au moins un nœud agencé pour transmettre des paquets de données à destination d'un autre nœud du réseau, tel que décrit ci-dessus.

L'invention concerne en outre un signal émis par un nœud à destination d'un autre nœud dans un réseau coopératif, en réponse à un message indiquant une route entre les deux nœuds et véhiculant une réponse du nœud comprenant au moins un paramètre indicateur de fiabilité destiné à être utilisé par cet autre nœud pour évaluer la fiabilité de la route.

L'invention sera mieux comprise à l'aide de la description suivante d'un mode de réalisation particulier du procédé de l'invention, en référence aux dessins annexés sur lesquels :
- la figure 1 représente une partie d'un réseau coopératif ;
- la figure 2 représente les étapes du procédé dans un nœud du réseau coopératif selon un mode particulier de réalisation de l'invention ;
- la figure 3 représente les étapes du procédé dans un nœud source selon un mode particulier de réalisation de l'invention ;
- la figure 4 représente un nœud du réseau coopératif selon l'invention ;
- la figure 5 représente un nœud source du réseau coopératif selon l'invention ;
- la figure 6 représente un message de réponse à un message de requête de route selon l'invention.

On appelle par la suite une route une liste ordonnée de nœuds permettant l'acheminement de paquets de données entre un nœud source et un nœud de destination.

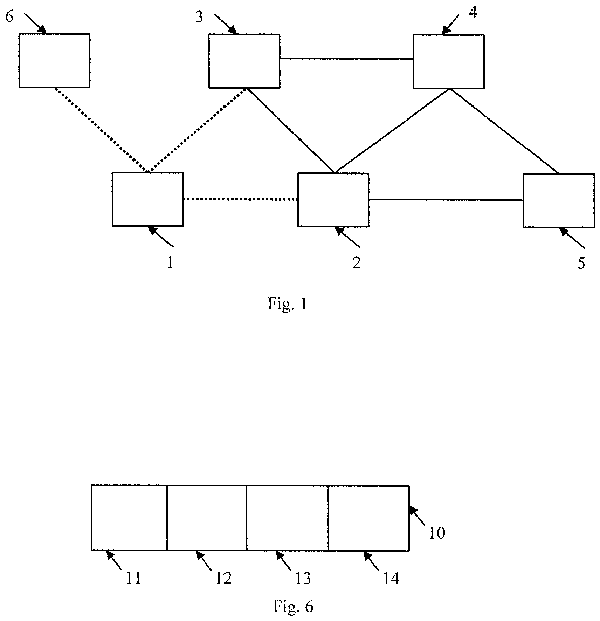

La figure 1 représente un réseau coopératif ad hoc formé par quatre nœuds référencés 2, 3, 4 et 5. Un nœud 6 n'appartient pas au réseau ad hoc. Les nœuds 2, 3, 4 et 5 coopèrent et les nœuds 2 et 4 permettent par exemple au nœud 3 de dialoguer avec le nœud 5 avec lequel il n'a pas de lien direct. Les nœuds sont des terminaux communicants sans fil. Il peut s'agir de téléphones mobiles, d'assistants ou d'ordinateurs personnels. Les liens entre les nœuds, tels que matérialisés sur la figure 1, sont des liens sans fil. Dans un mode particulier de réalisation de l'invention, le nœud 5 est un point d'accès à un réseau d'infrastructure et est administré par un opérateur. Un tel réseau est appelé par la suite réseau ad hoc hybride.

Un nœud 1, désigné par la suite sous le terme de nœud source, souhaite se joindre au réseau coopératif, et plus particulièrement souhaite communiquer avec le nœud 5, désigné par la suite sous le terme de nœud de destination. On considère que le nœud 1 a les nœuds 2, 3 et 6 dans sa zone de couverture radio.

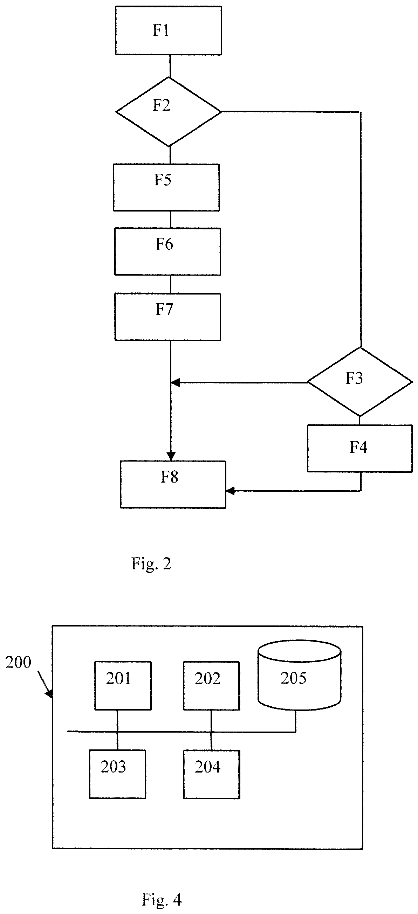

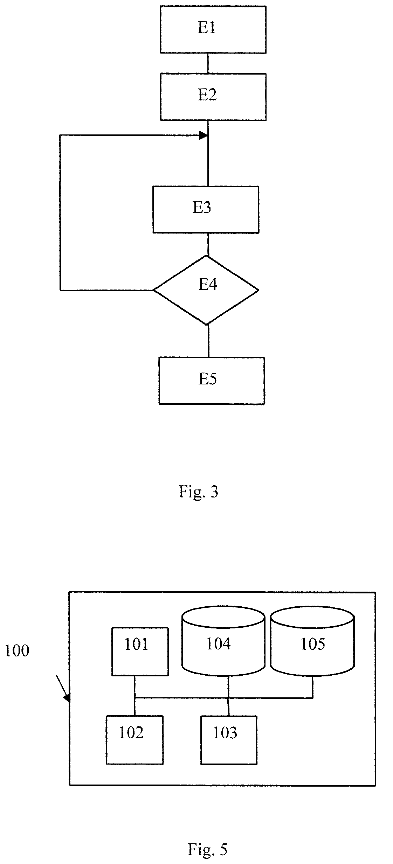

Nous allons maintenant décrire le procédé pour évaluer la fiabilité d'une route pour la transmission de paquets dans un réseau coopératif, tel qu'il se déroule sur un nœud source 1 par référence à la figure 3 et tel qu'il se déroule sur un nœud du réseau coopératif par référence à la figure 2. On se place dans le cas où le routage ultérieur des paquets dans le réseau s'effectue par le nœud source, celui-ci indiquant la route que doit suivre le paquet.

Le nœud source 1 met en œuvre, dans un premier temps, une étape E1 de découverte de nœuds voisins. Il s'agit de découvrir les nœuds voisins qui acceptent l'acheminement des paquets à destination du nœud de destination 5.

Le nœud source 1 transmet aux nœuds voisins 2, 3 et 6 un message de demande d'accès indiquant qu'il souhaite joindre le nœud de destination 5. Si un des nœuds voisins souhaite coopérer mais ne connaît pas de route permettant d'accéder au nœud de destination 5, il envoie à son tour un message de demande d'accès indiquant qu'il souhaite joindre le nœud de destination. Dans le cas où il souhaite coopérer et connaît une route permettant d'accéder au nœud de destination 5, il répond au message de demande d'accès en indiquant le nombre de sauts lui permettant d'atteindre le nœud de destination 5. Par saut, on entend un intervalle entre deux nœuds. Pour deux nœuds connectés directement, le nombre de sauts vaut un. Le nœud source 1 enregistre dans une table 104 de voisinage les informations comprenant une identification du nœud voisin, un nœud de destination et le nombre de sauts entre ces deux nœuds reçu dans le message de réponse à la demande d'accès.

Dans l'exemple de la figure 1, le nœud source 1 émet à destination des trois nœuds voisins 2, 3 et 6, situés dans sa zone de couverture radio, un message de demande d'accès vers le nœud de destination 5. Les nœuds 2 et 3 répondent au message de demande d'accès en indiquant respectivement un saut et deux sauts. Le nœud voisin 6 ne répond pas car il ne dispose pas d'informations pour joindre le nœud de destination 5 sans passer par le nœud 1.

Le procédé passe ensuite à une étape E2 d'envoi de requête de route. Dans cette étape E2, le nœud source 1 sélectionne un nombre prédéterminé N de nœuds voisins permettant de joindre le nœud de destination 5 selon un critère local. Il peut s'agir par exemple de nœuds présentant un nombre de sauts le plus faible possible, ou un indice de confiance local élevé. A titre d'exemple, on peut fixer le nombre prédéterminé N à la valeur 2, afin d'éviter la saturation du réseau par des messages de requête de route tout en permettant la découverte de plusieurs routes concourantes. Le nœud source envoie un message de requête de route aux N nœuds voisins sélectionnés comprenant son identification. Il déclenche une temporisation de supervision T et passe en attente de réception d'une réponse.

Un nœud du réseau coopératif reçoit au cours d'une étape F1 un message de requête de route comprenant une identification d'un nœud source 1, une identification d'un nœud de destination 5.

Dans une étape F2, le nœud 2, 3, 4 vérifie si l'identification du nœud de destination correspond à sa propre identification.

Si l'identification du nœud de destination ne correspond pas à la sienne, le nœud vérifie dans une étape F3 le nombre de sauts qu'a déjà effectué le message de requête de route.

Si un nombre maximum de sauts est atteint, il ne rediffuse pas le message et passe à l'étape F8.

Si un nombre maximum de sauts n'est pas atteint, il modifie dans une étape F4 une liste de nœuds comprise dans le message de requête de route et construite de nœud en nœud, correspondant à la route suivie par le message de requête de route, en y ajoutant son identification et envoie le message à un nombre M prédéterminé de nœuds voisins parmi ceux permettant d'atteindre le nœud de destination. Il passe ensuite à l'étape F8.

Si l'identification du nœud de destination correspond à la sienne, c'est-à-dire s'il est le destinataire du message de requête de route, le nœud de destination 5 enregistre la liste de nœuds correspondant à la route suivie dans une étape F5. Puis dans une étape F6, il évalue au moins un paramètre indicateur de fiabilité.

Le nœud de destination 5 administre une base de données, référencée 205 sur la figure 4. La base de données 205 comprend des enregistrements comprenant une identification d'un nœud et un indice de confiance associé à ce nœud.

De façon optionnelle, la base de données 205 peut également comprendre des informations telles qu'un indice de charge du nœud, un indice de structure du réseau.

La base de données 205 est créée et mise à jour régulièrement.

En ce qui concerne la création et la mise à jour des indices de confiance, le procédé comprend une étape de mise à jour des informations administrées par le nœud de destination en fonction de paquets de données acheminés correctement jusqu'au nœud de destination par au moins une route. Le nœud de destination 5 peut par exemple incrémenter de façon unitaire l'indice de confiance de chaque nœud d'une route lorsqu'un paquet est reçu sur celle-ci. A l'inverse, si la communication échoue, les indices de confiance de chaque nœud de la route sont décrémentés. Une telle méthode est par exemple utilisée dans l'article de C. Jensen, P. O'Connell, intitulé "Trust-Based Selection in Dynamic Source Routing", paru dans les actes de la 4ème conférence internationale iTrust de mai 2006. On notera que cette évaluation des indices de confiance par le nœud de destination 5 est particulièrement avantageuse dans un réseau ad hoc hybride où le nœud de destination est un point d'accès vers le réseau d'un opérateur.

Les indices de charge d'un nœud peuvent être envoyés en tant que paramètres du protocole de routage. Ainsi, un nœud ne pouvant plus communiquer correctement pour son propre compte demande à réduire sa contribution en remontant un indice de charge élevé. Si tel est le cas, la base de données 205 comprend des indices de charge.

Dans un mode particulier de réalisation où le nœud de destination 5 est un point d'accès vers le réseau d'un opérateur, un paramètre représentatif d'un indice de structure du réseau peut être prévu dans la base de données. On affecte une valeur maximale à un paramètre représentatif d'un indice de structure du réseau à un nœud appartenant au réseau de l'opérateur ou dont l'identifiant est connu de l'opérateur. Ainsi, une route, même plus longue, peut obtenir une valeur plus importante si elle traverse un nombre important de nœuds de l'opérateur. L'opérateur peut ainsi prévoir de privilégier des routes qui traversent des nœuds de son propre réseau, c'est-à-dire des nœuds dont il connaît les identifiants.

Un paramètre représentatif d'un indice de structure du réseau peut également être représentatif de la mobilité des nœuds. On peut ainsi privilégier des nœuds stables, c'est-à-dire peu mobiles.

Ainsi, l'évaluation d'un paramètre indicateur de fiabilité de la route consiste à évaluer la fiabilité de la route sur la base des indices contenus dans la base de données 205 pour chaque nœud que la route traverse.

Suite à l'évaluation du paramètre indicateur de fiabilité, il l'associe à la route et passe à l'étape F7.

L'étape F7 consiste à envoyer au nœud source un message 10 de réponse de route.

Ce message 10, tel que représenté à la figure 6, comprend une identification 11 du nœud émetteur du message, une identification d'une route 12, une identification 13 du nœud destinataire du message et au moins un paramètre indicateur de fiabilité 14. Dans le mode de réalisation décrit ci-dessus, le nœud émetteur du message est le nœud de destination 5 et le nœud destinataire du message est le nœud source 1. Seul un paramètre indicateur de fiabilité est représenté sur la figure 6. On peut prévoir des modes de réalisation où le nœud émetteur du message associe une pluralité de paramètres indicateurs de fiabilité, par exemple un paramètre représentatif de la confiance, un paramètre représentatif de la charge, un paramètre représentatif de la structure du réseau ou une combinaison de ces paramètres. Après réception du message de réponse de route par le nœud destinataire du message, c'est-à-dire le nœud source, celui-ci prend ensuite en compte ou non ces paramètres lors de la sélection de route ultérieure.

Le procédé tel qu'il s'exécute au nœud de destination 5 passe ensuite à l'étape F8, en attente de réception d'un message de requête de route.

Le nœud source 1 a envoyé un nombre prédéterminé N de messages de requête de route à l'étape E2. Le nœud de destination 5 reçoit quant à lui une pluralité de ces messages indiquant respectivement une pluralité de routes entre le nœud source 1 et le nœud de destination 5. Toutefois, le procédé tel que décrit permet de limiter le nombre de messages de requête de route afin de ne pas saturer le réseau coopératif avec de tels messages.

Le nœud source 1 est, quant à lui, en attente de réception de messages 10 de réponse de route.

A une étape E3, il reçoit un message 10 de réponse de route. Il mémorise dans une mémoire de travail, non représentée sur la figure 5, la route contenue dans le champ 12 du message ainsi que le ou les paramètres indicateur(s) de fiabilité indiqué(s) dans le champ 14.

Puis à une étape E4, il vérifie si la temporisation T a expiré.

Si ce n'est pas le cas, il repasse en attente de réception d'un message de réponse de route, sinon il passe à une étape E5 de sélection de route.

A l'étape E5 de sélection d'une route, le nœud source 1 prend en compte pour sélectionner une route vers le nœud de destination les paramètres indicateurs de fiabilité qu'il a mémorisés dans la mémoire de travail. Par exemple, il sélectionne la route dont le paramètre indicateur de fiabilité est le plus élevé. En fonction du nombre de paramètres indicateurs de fiabilité associés à chaque route et transmis par le nœud de destination, le nœud source 1 peut combiner suivant ses propres critères ces différents paramètres.

Ainsi, le nœud source sélectionne une route en fonction d'informations évaluées par un autre nœud. Cette solution permet d'éviter l'administration d'une base de données locale et l'évaluation d'indices de confiance par le nœud source. Dans un réseau coopératif hybride, le point d'accès est le nœud de destination d'une pluralité de routes, ses informations sont donc plus fiables, et ses capacités de traitement peuvent être plus importantes. De plus, la connaissance d'une pluralité de routes permet au nœud source de contourner les nœuds malveillants éventuels plus facilement.

Dans une variante, le nœud source 1 prend en compte également des indices de confiance qu'il a évalués et mémorisés dans une base de données locale associant des indices de confiance à des nœuds, référencée 105 sur la figure 5. Il évalue ainsi son propre paramètre indicateur de fiabilité sur chaque route et le combine selon ses propres critères avec le ou les paramètre(s) de confiance reçu(s) du nœud de destination.

Dans un mode particulier de réalisation, l'étape E1 n'est pas réalisée et à l'étape E2, le nœud source 1 envoie un message de requête de route comprenant son identification en mode diffusé et déclenche une temporisation de supervision T. Les autres étapes sont identiques à celles décrites ci-dessus.

On notera que l'utilisation du message de réponse de route pour transmettre au nœud source un paramètre indicateur de fiabilité présente également l'avantage d'éviter un échange d'informations supplémentaire entre le nœud source et le nœud de destination.

On notera également que le procédé peut également être mis en œuvre avec le protocole DSR, pour « Dynamic Source Routing ». On se trouve, dans ce cas, dans le mode particulier de réalisation décrit ci-dessus. De plus, à l'étape F3, le nœud vérifie s'il a déjà reçu le message de requête de route avant de le rediffuser. Les autres étapes du procédé sont inchangées. En conséquence, le nombre de messages de requête de route sera moins important qu'en utilisant le procédé tel que décrit mais l'invention présente toujours un avantage pour évaluer la fiabilité d'une route.

On va maintenant décrire un nœud de destination, en référence à la figure 4.

En référence à la figure 4, un nœud 200 de destination comprend :
- des moyens 201 de réception d'un message indiquant une route entre un nœud source et lui-même ;
- des moyens 202 d'évaluation, agencés pour évaluer, pour une route reçue par les moyens de réception, au moins un paramètre indicateur de fiabilité ;
- des moyens 203 d'association, agencés pour associer à une route au moins un paramètre indicateur de fiabilité, évalué par les moyens d'évaluation ;
- des moyens 204 d'envoi, agencés pour transmettre au nœud source une réponse comprenant le paramètre associé.

De façon optionnelle, le nœud de destination comprend une base de données 205 d'enregistrements comprenant une identification d'un nœud et des informations relatives aux nœuds du réseau, les informations appartenant au groupe comportant un indice de confiance, un indice de charge, un indice de structure du réseau et une combinaison de ces indices.

On va maintenant décrire un nœud source, en référence à la figure 5.

En référence à la figure 5, un nœud source 100 comprend :
- des moyens 101 de recherche de route, agencés pour transmettre un message de recherche de route à destination d'un nœud du réseau ;
- des moyens 102 de réception, agencés pour recevoir une réponse 10 au message de recherche de route, ladite réponse comprenant une route entre le nœud du réseau et lui-même et au moins un paramètre indicateur de fiabilité associé à la route.

Le nœud source comprend également des moyens 103 de sélection de route, agencés pour sélectionner une route parmi une pluralité de routes en prenant en compte au moins les paramètres associés respectivement à la pluralité de routes.

Dans un mode de réalisation, le nœud source comprend également une table 104 de voisinage, agencée pour mémoriser des nœuds voisins et le nombre de sauts nécessaires pour atteindre un nœud de destination.

De façon optionnelle, le nœud source comprend également une base de données locale 105 associant des indices de confiance à des nœuds.

Les modules 101, 102, 103 qui mettent en œuvre le procédé précédemment décrit, sont de préférence des modules logiciels comprenant des instructions logicielles pour faire exécuter celles des étapes du procédé précédemment décrit par le nœud source 100.

Les modules 201, 202, 203, 204 qui mettent en œuvre le procédé précédemment décrit, sont de préférence des modules logiciels comprenant des instructions logicielles pour faire exécuter celles des étapes du procédé précédemment décrit qui sont mises en œuvre par le nœud de destination 200.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de communication entre une pluralité de nœuds dans un réseau coopératif, comprenant au moins un nœud de destination 200 tel que décrit ci-dessus et au moins un nœud source 100, tel que décrit ci-dessus.

## Revendications

1. Procédé pour évaluer la fiabilité d'une route dans un réseau coopératif pour la transmission de paquets de données entre un nœud source et un nœud de destination du réseau, comprenant une étape de mise à jour d'une base de données administrée par le nœud de destination et comprenant des enregistrements relatifs à des nœuds du réseau, chaque enregistrement comprenant une identification d'un dit nœud du réseau et au moins une information relative à ce nœud comprenant un indice de confiance associé à ce nœud, ledit indice de confiance étant mis à jour lors de l'étape de mise à jour en fonction de paquets de données acheminés correctement jusqu'au nœud de destination par au moins une route comprenant ledit nœud, ledit procédé comprenant, sur réception (F1) par le nœud de destination de chaque message de requête de route indiquant une route entre ledit nœud source et le nœud de destination :
- une étape d'évaluation par le nœud de destination d'au moins un paramètre indicateur de fiabilité (F6) à partir desdites informations comprises dans la base de données administrée par le nœud de destination et relatives aux nœuds du réseau traversés par la route indiquée,
- une étape d'association à la route indiquée dudit au moins un paramètre indicateur de fiabilité par le nœud de destination, et
- une étape (F7) d'envoi par le nœud de destination au nœud source d'une réponse comprenant ledit au moins un paramètre indicateur de fiabilité associé à la route indiquée.

2. Procédé selon la revendication 1, dans lequel ladite au moins une information relative audit nœud comprend en outre un indice de charge et/ou un indice de structure du réseau.

3. Procédé selon l'une quelconque des revendications précédentes, dans lequel le nœud source envoie (E2) un message de requête de route à une pluralité de nœuds voisins, le message étant transmis de nœud en nœud dans le réseau à destination du nœud de destination et indiquant au fur et à mesure la route suivie par le message.

4. Procédé selon l'une quelconque des revendications précédentes, dans lequel le nœud source reçoit une pluralité de réponses du nœud destination correspondant à une pluralité de routes indiquées au nœud de destination, et il est prévu une étape (E5) de sélection de route prenant en compte au moins les paramètres indicateurs de fiabilité respectifs associés aux dites routes.

5. Nœud (5) dans un réseau coopératif, dit nœud de destination, comprenant :
- des moyens de mise à jour d'une base de données administrée par le nœud de destination et comprenant des enregistrements relatifs à des nœuds du réseau, chaque enregistrement comprenant une identification d'un dit nœud du réseau et au moins une information relative à ce nœud, ladite au moins une information comprenant un indice de confiance mis à jour par lesdits moyens de mise à jour en fonction de paquets de données acheminés correctement jusqu'au nœud de destination par au moins une route comprenant ledit au moins un nœud,
- des moyens d'évaluation (202) agencés pour, sur réception par le nœud de destination de chaque message de requête de route indiquant une route entre un nœud source (1) et lui-même, évaluer au moins un paramètre indicateur de fiabilité à partir desdites informations comprises dans la base administrée par le nœud de destination et relatives aux nœuds du réseau traversés par la route indiquée,
- des moyens d'association (203), agencés pour associer à la route indiquée au moins un paramètre indicateur de fiabilité, et
- des moyens d'envoi (204), agencés pour transmettre audit nœud source une réponse comprenant ledit au moins un paramètre indicateur de fiabilité associé à la route indiquée.

6. Système de communication entre une pluralité de nœuds dans un réseau coopératif, comprenant au moins un nœud source (1), et un nœud de destination (5) selon la revendication 5.

7. Système de communication selon la revendication 6 dans lequel le nœud source comprend :
- des moyens de réception d'une pluralité de réponses du nœud destination correspondant à une pluralité de routes indiquées au nœud de destination, et
- des moyens de sélection, agencés pour sélectionner une route prenant en compte au moins les paramètres indicateurs de fiabilité respectifs associés aux dites routes.

8. Programme pour évaluer la fiabilité d'une route, pour un nœud d'un réseau coopératif, comprenant des instructions de programme destinées à commander l'exécution de celles des étapes du procédé selon l'une quelconque des revendications 1 à 4 qui sont exécutées par le nœud de destination lorsque ledit programme est exécuté par celui-ci.

9. Support d'enregistrement lisible par un nœud sur lequel est enregistré le programme selon la revendication 8.

## Patentansprüche

1. Verfahren zur Bewertung der Zuverlässigkeit einer Route in einem kooperativen Netzwerk zur Übertragung von Datenpaketen zwischen einem Quellknoten und einem Zielknoten des Netzwerks, umfassend einen Schritt des Aktualisierens einer Datenbank, die vom Zielknoten verwaltet wird und Einträge bezüglich der Knoten des Netzwerks umfasst, wobei jeder Eintrag eine Identifikation eines Knotens des Netzwerks und mindestens eine Information bezüglich dieses Knotens umfasst, die einen diesem Knoten zugeordneten Konfidenzindex umfasst, wobei der Konfidenzindex beim Aktualisierungsschritt in Abhängigkeit von Datenpaketen aktualisiert wird, die über mindestens eine den Knoten umfassende Route ordnungsgemäß bis zum Zielknoten transportiert wurden, wobei das Verfahren beim Empfangen (F1) jeder eine Route zwischen dem Quellknoten und dem Zielknoten angebenden Routenanforderungsnachricht durch den Zielknoten umfasst:
- einen Schritt des Bewertens mindestens eines Zuverlässigkeitsindikatorparameters (F6) durch den Zielknoten anhand der Informationen, die in der vom Zielknoten verwalteten Datenbank enthalten sind und die von der angegebenen Route durchquerten Knoten des Netzwerks betreffen,
- einen Schritt des Zuordnens des mindestens einen Zuverlässigkeitsindikatorparameters zu der angegebenen Route durch den Zielknoten und
- einen Schritt (F7) des Sendens einer Antwort, die den mindestens einen der angegebenen Route zugeordneten Zuverlässigkeitsindikatorparameter umfasst, durch den Zielknoten an den Quellknoten.

2. Verfahren nach Anspruch 1, bei dem die mindestens eine Information bezüglich des Knotens ferner einen Lastindex und/oder einen Strukturindex des Netzwerks umfasst.

3. Verfahren nach einem der vorhergehenden Ansprüche, bei dem der Quellknoten eine Routenanforderungsnachricht an eine Mehrzahl von Nachbarknoten sendet (E2), wobei die Nachricht in dem Netzwerk von Knoten zu Knoten zum Zielknoten übertragen wird und Zug um Zug die Route angibt, der die Nachricht folgt.

4. Verfahren nach einem der vorhergehenden Ansprüche, bei dem der Quellknoten eine Mehrzahl von Antworten vom Zielknoten empfängt, die einer Mehrzahl von angegebenen Routen zum Zielknoten entsprechen, und ein Routenauswahlschritt (E5) vorgesehen ist, der mindestens die den Routen zugeordneten jeweiligen Zuverlässigkeitsindikatorparameter berücksichtigt.

5. Knoten (5) in einem kooperativen Netzwerk, Zielknoten genannt, umfassend:
- Aktualisierungsmittel zum Aktualisieren einer Datenbank, die vom Zielknoten verwaltet wird und Einträge bezüglich von Knoten des Netzwerks umfasst, wobei jeder Eintrag eine Identifikation eines Knotens des Netzwerks und mindestens eine Information bezüglich dieses Knotens umfasst, wobei die mindestens eine Information einen Konfidenzindex umfasst, der von den Aktualisierungsmitteln in Abhängigkeit von Datenpaketen aktualisiert wird, die über mindestens eine den mindestens einen Knoten umfassende Route ordnungsgemäß bis zum Zielknoten transportiert wurden,
- Bewertungsmittel (202), die dazu eingerichtet sind, beim Empfangen jeder Routenanforderungsnachricht durch den Zielknoten, die eine Route zwischen einem Quellknoten (1) und ihm selbst angibt, mindestens einen Zuverlässigkeitsindikatorparameter anhand der Informationen zu bewerten, die in der vom Zielknoten verwalteten Datenbank enthalten sind und die von der angegebenen Route durchquerten Knoten des Netzwerks betreffen,
- Zuordnungsmittel (203), die dazu eingerichtet sind, der angegebenen Route mindestens einen Zuverlässigkeitsindikatorparameter zuzuordnen, und
- Sendemittel (204), die dazu eingerichtet sind, an den Quellknoten eine Antwort zu senden, die den mindestens einen der angegebenen Route zugeordneten Zuverlässigkeitsindikatorparameter umfasst.

6. Kommunikationssystem zwischen einer Mehrzahl von Knoten in einem kooperativen Netzwerk, das mindestens einen Quellknoten (1) und einen Zielknoten (5) nach Anspruch 5 umfasst.

7. Kommunikationssystem nach Anspruch 6, bei dem der Quellknoten umfasst:
- Mittel zum Empfangen einer Mehrzahl von Antworten vom Zielknoten, die einer Mehrzahl von angegebenen Routen zum Zielknoten entsprechen, und
- Auswahlmittel, die dazu eingerichtet sind, eine Route unter Berücksichtigung mindestens der den Routen zugeordneten jeweiligen Zuverlässigkeitsindikatorparameter auszuwählen.

8. Programm zur Bewertung der Zuverlässigkeit einer Route für einen Knoten eines kooperativen Netzwerks, umfassend Programmbefehle, die dazu bestimmt sind, die Ausführung derjenigen der Schritte des Verfahrens nach einem der Ansprüche 1 bis 4 zu steuern, die vom Zielknoten ausgeführt werden, wenn das Programm von ihm ausgeführt wird.

9. Von einem Knoten lesbares Speichermedium, auf dem das Programm nach Anspruch 8 gespeichert ist.

## Claims

1. Method for evaluating the reliability of a route in a cooperative network for the transmission of data packets between a source node and a destination node of the network, comprising a step of updating a database that is administered by the destination node and comprises records relating to nodes of the network, each record comprising an identification of one said node of the network and at least one item of information relating to this node comprising a confidence index associated with this node, said confidence index being updated during the updating step on the basis of data packets correctly forwarded to the destination node via at least one route comprising said node, said method comprising, upon reception (F1) by the destination node of each route request message indicating a route between said source node and the destination node:
- a step (F6) of the destination node evaluating at least one parameter indicative of reliability on the basis of said items of information that are contained in the database administered by the destination node and relate to the network nodes through which the indicated route passes,
- a step of the destination node associating said at least one parameter indicative of reliability with the indicated route, and
- a step (F7) of the destination node sending the source node a response comprising said at least one parameter indicative of reliability that is associated with the indicated route.

2. Method according to Claim 1, wherein said at least one item of information relating to said node further comprises a load index and/or a network structure index.

3. Method according to either one of the preceding claims, wherein the source node sends (E2) a route request message to a plurality of neighbour nodes, the message being transmitted from node to node in the network to the destination node and, while it is transmitted, indicating gradually the route taken by the message.

4. Method according to any one of the preceding claims, wherein the source node receives a plurality of responses from the destination node, which correspond to a plurality of routes indicated to the destination node, and there is provided a step (E5) of selecting a route taking into account at least the respective parameters indicative of reliability that are associated with said routes.

5. Node (5) in a cooperative network, known as destination node, comprising:
- means for updating a database that is administered by the destination node and comprises records relating to nodes of the network, each record comprising an identification of one said node of the network and at least one item of information relating to this node, said at least one item of information comprising a confidence index updated by said updating means on the basis of data packets correctly forwarded to the destination node via at least one route comprising said at least one node,
- evaluation means (202) designed to evaluate, upon reception by the destination node of each route request message indicating a route between a source node (1) and said destination node, at least one parameter indicative of reliability on the basis of said items of information that are contained in the database administered by the destination node and relate to the network nodes through which the indicated route passes,
- association means (203) designed to associate at least one parameter indicative of reliability with the indicated route, and
- sending means (204) designed to transmit to said source node a response comprising said at least one parameter indicative of reliability that is associated with the indicated route.

6. System for communication between a plurality of nodes in a cooperative network, comprising at least one source node (1) and a destination node (5) according to Claim 5.

7. Communication system according to Claim 6, wherein the source node comprises:
- means for receiving a plurality of responses from the destination node, which correspond to a plurality of routes indicated to the destination node, and
- selection means designed to select a route taking into account at least the respective parameters indicative of reliability that are associated with said routes.

8. Program for evaluating the reliability of a route, for a node of a cooperative network, comprising program instructions intended to control the execution of those steps of the method according to any one of Claims 1 to 4 that are executed by the destination node when said program is executed by the latter.

9. Recording medium that can be read by a node and on which the program according to Claim 8 is recorded.
